# DEMANDE DE BREVET EUROPEEN

(11) **EP 0 794 678 A1**
(43) Date de publication de la demande: **10.09.1997**
(21) Numéro de dépôt: 97400493.9
(22) Date de dépôt: 04.03.1997
(51) Int. Cl.: H04Q 7/18, H04B 1/16

(54) **Système de communication par liaison radio**

(30) Priorité: 08.03.1996 FR 9602945
(71) Demandeur: Société d'Applications Mécaniques et Electriques de Boulogne-Billancourt SAPPEL, 68300 Saint-Louis (FR)
(72) Inventeur: Bach, Guy, 68520 Schweighouse (FR)
(74) Mandataire: Dawidowicz, Armand

(57) **Abrégé**

L'invention concerne un système de communication par liaison radio alimenté par pile, du type comprenant au moins un émetteur et un récepteur, ledit récepteur fonctionnant de manière intermittente entre un mode actif et un mode veille.

L'invention consiste en ce que le récepteur présente une fréquence de fonctionnement intermittent telle que le temps en mode actif est le plus court possible devant le temps en mode veille et l'émetteur émet au moins une trame courte vers le récepteur, ladite trame comportant des informations minimales à l'initialisation d'une communication de telle sorte que le temps de stabilisation du récepteur est compatible avec le temps en mode actif de la fréquence de fonctionnement intermittent dudit récepteur

Application aux communications par liaison radio

## Description

La présente invention concerne un système de communication par liaison radio fonctionnant selon un mode optimal de consommation énergétique et de confort d'utilisation.

Les systèmes de communication par liaison radio, comportant au moins un couple émetteur-récepteur, sont le plus souvent alimentés par pile. Afin de leur conférer une autonomie de fonctionnement d'environ 10 ans, on adopte un mode de fonctionnement intermittent pour les récepteurs. Il convient, en effet, d'alterner un mode actif, consommant beaucoup d'énergie, avec un mode veille dans lequel la consommation d'énergie est réduite. Un dimensionnement approprié du rapport cyclique entre le mode actif et le mode veille permet d'atteindre une consommation moyenne satisfaisante conduisant à l'autonomie désirée.

Cependant, contrairement à un récepteur constamment en mode actif, c'est-à-dire toujours prêt à détecter un signal, ce mode de fonctionnement alterné implique que le temps d'établissement d'un dialogue radio dépend de l'instant où le récepteur est en mode actif. De ce fait, il est important que le temps pendant lequel le récepteur est en mode actif soit suffisant pour l'établissement d'une communication.

En effet, au début de toute communication par liaison radio, l'émetteur va délivrer une trame vers le récepteur afin d'initialiser la communication. Au cours de cette émission, l'émetteur doit tenir compte du fait que le récepteur fonctionne de manière intermittente et qu'il n'est donc à l'écoute que cycliquement et pendant un certain laps de temps.

Cependant, on a pu remarquer que les systèmes dont la consommation en énergie a été optimisée présentent un temps en mode veille beaucoup plus long que le temps en mode actif, ce qui a pour conséquence de dégrader le confort d'utilisation notamment en allongeant le temps d'établissement d'une communication.

Ainsi, EP-A-0 319 219 propose un appareil d'échange de données comportant un moyen de réception de signaux radio sur un canal radio prédéterminé, un moyen de détection de signal en réponse au moyen de réception pour détecter des signaux de synchronisation et des moyens d'alimentation en énergie pour contrôler ledit moyen. Cet appareil fonctionne de manière intermittente entre un mode actif et un mode veille, le mode actif permettant de recevoir des signaux qui, soumis aux moyens de détection, permettent de déclencher l'établissement d'un dialogue. Une économie d'énergie est obtenue en imposant un mode veille dès qu'un signal dans la transmission est détecté ou qu'un signal spécifique est détecté et commande le mode veille pour une période de temps prédéterminée pendant laquelle aucun établissement de dialogue ne peut être réalisé.

On favorise par conséquent le temps en mode veille du système afin d'économiser de l'énergie en empêchant notamment l'établissement d'un dialogue pendant des périodes de temps prédéterminées. Un tel système nécessite donc de définir des plages de temps où aucune communication ne pourra être établie ce qui limite le confort d'utilisation.

Il convient donc de proposer un système de communication par liaison radio qui permet une consommation en énergie optimale tout en assurant un confort d'utilisation, en particulier en garantissant un temps d'établissement du dialogue le plus court possible.

Le but de l'invention est donc de proposer un système de communication par liaison radio comportant des moyens propres à assurer une probabilité de réveil du récepteur élevée de manière à permettre une réduction du temps d'établissement d'une communication tout en conservant une consommation d'énergie optimale.

A cet effet, l'invention a pour objet un système de communication par liaison radio alimenté par pile, du type comprenant au moins un émetteur et un récepteur, ledit récepteur fonctionnant de manière intermittente entre un mode actif et un mode veille, caractérisé en ce que le récepteur présente une fréquence de fonctionnement intermittent telle que le temps en mode actif est le plus court possible devant le temps en mode veille, la fréquence de scrutation étant augmentée de manière à favoriser une diminution du temps d'établissment d'une communication et l'émetteur émet au moins une trame courte vers le récepteur, ladite trame comportant des informations minimales à l'initialisation d'une communication de telle sorte que le temps de stabilisation du récepteur est compatible avec le temps en mode actif de la fréquence de fonctionnement intermittent dudit récepteur.

Ainsi, pour une consommation d'énergie équivalente à une fréquence de fonctionnement classique d'un récepteur, on diminue le plus possible le temps en mode actif afin de favoriser sa fréquence par rapport au temps en mode veille, augmentant ainsi la fréquence de scrutation et favorisant par conséquent, la diminution du temps d'établissement d'une communication, en augmentant la probabilité de réveil du récepteur.

Avantageusement, l'émetteur et le récepteur comportent tous deux des moyens propres à émettre et à analyser les informations renfermées dans la trame courte.

Dans le système de communication selon l'invention, la trame peut être délivrée sous trois formes différentes comportant chacune au moins la trame courte.

Ainsi, le système selon l'invention peut utiliser en tant que trame de communication une trame courte, une trame complète et une trame composée constituée de deux trames complètes.

La trame courte commune aux trois formes est la suivante :
REV - SYN - ID - ADD - TYP

Elle est donc composée d'un champ de séquence de réveil (REV). Cette séquence de réveil se fait en émettant continuellement une succession de 0 et de 1 pendant un temps TREV ou MREV, ce qui revient à émettre continuellement par l'intermédiaire d'une UART l'octet 55h.

Puis, la trame comporte un champ de synchronisation (SYNC) égal à FFh qui génère un état stable pendant une durée de 9 bits permettant à l'UART du récepteur de se synchroniser afin de recevoir de manière correcte les octets suivants.

Ensuite, la trame comporte un champ identificateur de l'appelant (ID) codé sur trois octets et qui correspond à la désignation internationale des sociétés. Il permet à tout récepteur de la société indiquée par cet identificateur de l'appelant de déterminer si, dans sa zone d'activité, il existe une émission radio susceptible de le concerner.

Puis, la trame comporte un champ définissant l'adresse du récepteur (ADD) sur quatre octets. En plus de ce champ adresse (ADD) entré lors de l'installation, un champ adresse (ADD') peut également être pris en compte et permet alors de faire de l'interrogation multiple.

Enfin, un champ (TYP) définit le type de trame et permet d'augmenter le confort d'utilisation du système selon l'invention dans la mesure où, pouvant prendre 5 valeurs différentes correspondant chacune à un unique type de trame, il permet au récepteur de déterminer le type d'émission en question.

Ainsi, dans le cas d'une trame courte, le champ TYP peut prendre une première valeur 11h correspondant à une interrogation simple, une deuxième valeur 22h correspondant à l'indication qu'il n'y a rien d'autre à émettre ou encore une troisième valeur 33h correspondant au signalement d'une erreur de communication.

La trame complète est la suivante :
REV - SYN - ID - ADD - TYP - NOS - DUTC - CRCC

Cette trame reproduit la trame courte et comporte, en outre, un champ (NOS) définissant le nombre d'octets contenus dans le champ des données utiles à transmettre (DUTC), puis le champ (DUTC) lui-même, correspondant auxdites données utiles à transmettre. Ce champ constitué d'une suite d'octets peut représenter tout type d'informations tel que des données, un ordre, une confirmation, une demande d'information, etc.

A la suite des données utiles à transmettre, on prévoit également un champ correspondant à un contrôle d'erreur du type CRC16 portant sur les données utiles à transmettre.

Afin de préserver une certaine confidentialité des informations transmises par le système selon l'invention, celui-ci comporte des moyens de cryptage des données utiles à transmettre et du contrôle d'erreur portant sur ces données. Lesdits moyens sont constitués par une séquence pseudo aléatoire dont la clef est l'adresse de l'appelé (ADD).

De préférence, le cryptage est obtenu par la combinaison du signal avec la séquence pseudo aléatoire dont le générateur peut être réalisé par un registre à décalage bouclé par une fonction addition modulo-2. Le nombre de séquences possibles P et leurs longueurs N seront alors indiqués en fonction du nombre de bits du registre de décalage.

On décrira maintenant l'invention plus en détails à l'aide d'un exemple de réalisation du système de communication par liaison radio en référence au dessin dans lequel :

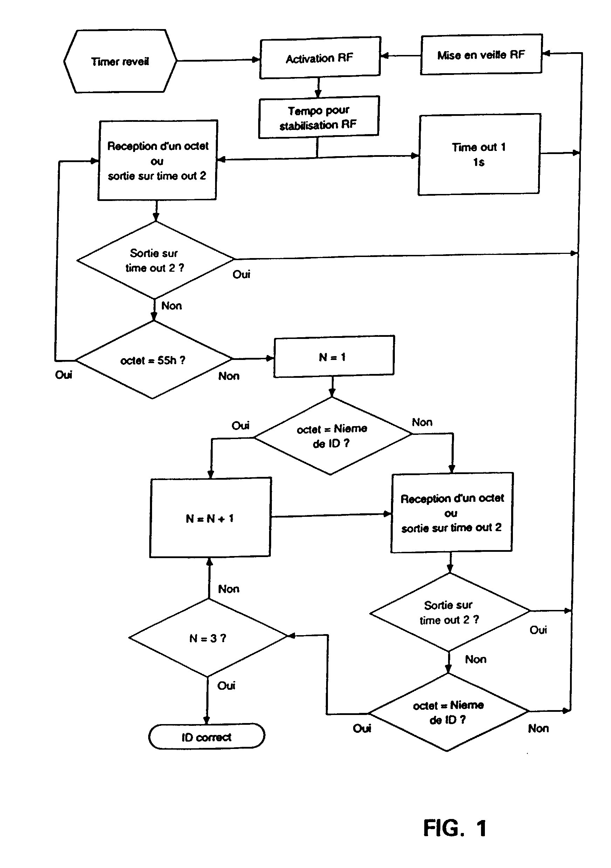

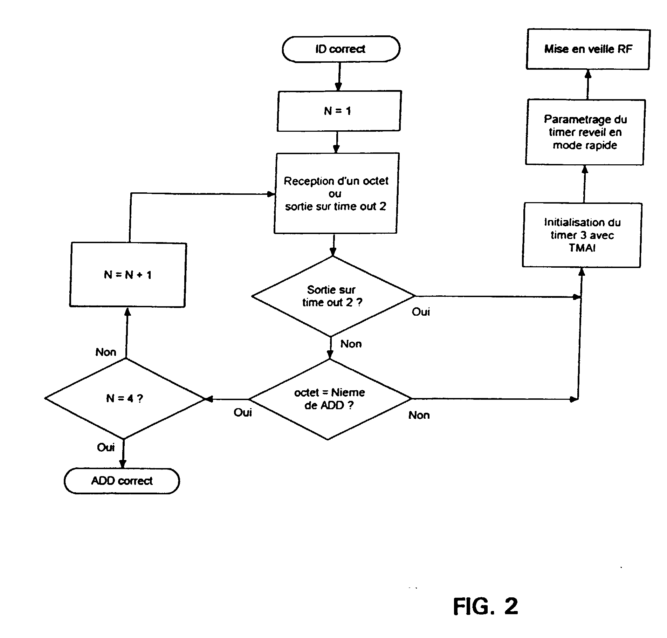

les figures 1 et 2 représentent sous forme d'organigramme le fonctionnement du récepteur d'un système selon l'invention.

Lorsque l'Horloge-Réveil du récepteur lui en donne l'ordre, le récepteur Radio Fréquence (RF) est activé et les données sérielles qui en sortent peuvent être analysées de la manière décrite dans l'organigramme de la figure 1.

En phase de détection de la séquence de réveil (REV), il est important de pouvoir accepter un certain pourcentage d'octets différents de la valeur habituelle de cette séquence 55H, sinon le test est trop dur étant donné la longueur de la séquence de réveil par rapport à la longueur de la trame.

Lorsque l'identification de l'appelant est correcte, le récepteur a donc détecté une activité radio susceptible de la concerner, l'initialisation de la communication est amorcée et il va donc continuer à analyser toutes les informations qui lui arrivent de la manière décrite dans l'organigramme de la figure 2.

Lorsque l'adresse de l'appelé n'est pas correcte, le récepteur comprend que l'activité radio est adressée à un autre récepteur ou qu'il y a eu une erreur de transmission. Cependant, ledit récepteur sait qu'il y des activités radio susceptibles de la concerner dans la mesure où il a reconnu l'identification de l'appelant et, dans ce cas, il peut passer dans un mode de réveil rapide (le récepteur RF est activé plus souvent par l'Horloge-Réveil) et ceci pendant un temps maximal. Ceci permet avantageusement de diminuer également le temps de réaction dudit récepteur lorsqu'il sera réellement interrogé par l'émetteur.

Lorsque l'adresse de l'appelé est correcte, il analyse le champ TYP qui ne peut prendre que trois valeurs différentes 11h, 22h et 44h.

Le récepteur peut déterminer une valeur du champ TYP égale à 11h correspondant à une interrogation simple, ce qui est le cas le plus fréquent lors d'un radio-relevé. Dans ce cas, le récepteur peut avoir la capacité de répondre immédiatement et il émet une trame complète en réponse, comportant un champ TYP de valeur 44h annonçant l'envoi de données utiles à transmettre.

Dans le cas de l'utilisation d'un champ ADD', celui-ci est suivi du champ TYP d'une valeur 11h et l'appareil ayant reconnu cette adresse ADD' doit répondre immédiatement une trame complète dans laquelle le champ ADD est l'adresse donnée lors de l'installation. De préférence, le champ ADD' est égal à FOFOFOFO en héxadécimal (soit 4 042 322 160 en décimal). ceci permet de faire de l'interrogation multiple.

Si le récepteur n'a pas la capacité de répondre immédiatement, il émet une trame composée de manière à prévenir l'émetteur de l'envoi d'une réponse différée.

Dans ce cas, la trame composée émise par le récepteur est constituée de deux trames complètes espacées d'un temps d'attente de réponse différée (TARD), dans lequel le champ TYP a la valeur 55h et ne contient dans son champ des données utiles à transmettre que le temps d'attente de réponse différée suivi d'une durée de réponse maximale différée (DRMD). Ainsi, l'émission de la première trame permet d'informer l'émetteur qui se trouve être maintenant le récepteur à l'écoute qu'il a affaire à une réponse composée et que les données attendues ne viendront qu'après le temps de réponse différée lors de l'émission de la seconde trame.

Celle-ci comporte alors un champ TYP de valeur 44h annonçant l'émission immédiate des données et renferme dans son champ des données utiles à transmettre, les données attendues. Le temps d'attente de réponse différée permet de préparer les données à transmettre. La séquence de réveil débutant la seconde trame est de préférence d'une durée plus courte dite miniréveil (MREV).

Le champ TYP de la trame émise par l'émetteur peut également avoir la valeur 22h correspondant au réveil du récepteur, c'est-à-dire à son passage du mode lent au mode rapide ; dans ce cas, l'émetteur envoie une trame courte pour signaler sa présence, permettant ainsi au récepteur de passer en mode rapide ou pour simple confirmation.

La valeur 44h du champ TYP de la trame émise par l'émetteur indique l'envoi de données utiles à transmettre au récepteur. Il convient par conséquent de réceptionner le champ NOS définissant le nombre d'octets des données utiles à transmettre puis les données elle-même et enfin les deux octets correspondants au contrôle d'erreur.

Si aucune de ces valeurs de champ TYP n'est analysée par le récepteur, celui-ci émet une trame en réponse comportant un champ TYP égal à 33h indiquant qu'il y a une erreur de transmission. Le récepteur peut alors se remettre en mode de veille rapide pour un temps maximal.

Des réveils parasites peuvent être provoqués par un système quelconque émettant également un signal de réveil. Afin de limiter les risques d'épuisement de l'autonomie du récepteur par ces réveils intempestifs, le temps de réveil est limité de telle sorte qu'il est possible de filtrer au niveau du récepteur tout signal de séquence de réveil dont le temps est plus long ou n'est pas suivi de la bonne identification de l'appelant.

L'émetteur, quant à lui, émet donc des trames courtes ou complètes avec un temps de réveil légèrement supérieur à la période minimale de réveil du récepteur. Après quoi, le récepteur Radio Fréquence de l'émetteur passe immédiatement en mode écoute pour pouvoir recevoir la réponse du récepteur. Lorsque cette réponse ne vient pas après un temps défini d'attente de réponse, l'émetteur réémet la même trame et repasse en mode écoute et ainsi de suite jusqu'à ce que s'établisse la communication.

Lorsqu'une réponse n'est pas parvenue en entier au cours d'un temps de réponse maximale, l'émetteur sort du mode écoute et réémet une trame complète.

Dans le cas d'une réponse différée du récepteur, au bout d'un temps d'attente de réponse différée, l'émetteur sort du mode écoute si aucune réponse ne lui est parvenue et il réémet une trame complète.

Par contre, si au bout d'une durée de réponse maximale, la réponse complète n'est pas parvenue, l'émetteur sort du mode écoute et réémet une trame complète.

Afin d'assurer la confidentialité des données, on réalise un cryptage de celles-ci à l'aide d'une séquence pseudo-aléatoire. Ce cryptage est obtenu par des additions modulo-2 entre la séquence pseudo-aléatoire et le signal. Ainsi, une implémentation logicielle avec un registre à décalage de 16 bits est utilisée et offre des possibilités assez larges.

Le polynôme générateur de la séquence pseudo aléatoire est donc : h(Z) = Z¹⁶ + Z¹² + Z⁵ + 1.

De préférence, ce polynôme est identique au polynôme générateur du contrôle d'erreur.

## Revendications

1. Système de communication par liaison radio alimenté par pile, du type comprenant au moins un émetteur et un récepteur, ledit récepteur fonctionnant de manière intermittente entre un mode actif et un mode veille,
caractérisé en ce que le récepteur présente une fréquence de fonctionnement intermittent telle que le temps en mode actif est le plus court possible devant le temps en mode veille, la fréquence de scrutation étant augmentée de manière à favoriser une diminution du temps d'établissement d'une communication, et l'émetteur émet au moins une trame courte vers le récepteur, ladite trame comportant des informations minimales à l'initialisation d'une communication de telle sorte que le temps de stabilisation du récepteur est compatible avec le temps en mode actif de la fréquence de fonctionnement intermittent dudit récepteur.

2. Système selon la revendication 1,
caractérisé en ce que la trame peut être délivrée sous trois formes différentes, trame courte, trame complète trame composée comportant chacune au moins la trame commune suivante :
REV - SYNC - ID - ADD - TYP
dans laquelle :
REV est un champ de séquence de réveil,
SYNC est un champ de synchronisation,
ID est un champ identificateur de l'appelant correspondant à la désignation internationale des sociétés,
ADD est un champ définissant l'adresse du récepteur et TYP est un champ définissant le type de trame émise.

3. Système selon la revendication 2,
caractérisé en ce que la trame comporte, en outre, un champ adresse (ADD').

4. Système selon l'une des revendications 2 et 3,
caractérisé en ce que la trame courte correspond à la trame commune dans laquelle la valeur du champ TYP indique une interrogation simple, qu'il n'y plus rien à émettre ou une erreur de transmission.

5. Système selon l'une des revendications 2 et 3,
caractérisé en ce qu'une trame complète est constituée de la trame commune dans laquelle le champ TYP indique l'envoi immédiat d'information et qui comporte en outre un champ NOS indiquant le nombre d'octets correspondant aux informations, un champ DUTC contenant les données utiles à transmettre et un champ CRCC de contrôle d'erreur.

6. Système selon l'une des revendications 2 et 3,
caractérisé en ce qu'une trame composée est constituée de deux trames complètes,
la première trame complète comportant un champ TYP dont la valeur indique un envoi différé des informations, un champ NOS et un champ DUTC contenant un temps d'attente de réponse différée TARD et une durée maximale de réponse différée DRMD ; et
la seconde trame comportant un champ TYP indiquant l'envoi immédiat de données et le champ DUTC contenant les informations à transmettre.

7. Système selon l'une des revendications 1 à 6,
caractérisé en ce que le système comporte des moyens de cryptage des données utiles à transmettre et du contrôle d'erreur.

8. Système selon la revendication 7,
caractérisé en ce que les moyens de cryptage sont constitués par une séquence pseudo aléatoire dont la clef est l'adresse de l'appelé.
